# EUROPÄISCHE PATENTANMELDUNG

(11) **EP 1 688 637 A1**
(43) Veröffentlichungstag der Anmeldung: **09.08.2006**
(21) Anmeldenummer: 05028699.6
(22) Anmeldetag: 30.12.2005
(51) Int. Cl.: F16F 9/02, F16F 9/52

(54) **Gasfeder**

(30) Priorität: 04.02.2005 DE 102005004982
(71) Anmelder: Stabilus GmbH, 56070 Koblenz (DE)
(72) Erfinder: Mintgen, Rolf, 56743 Thuer (DE)
(74) Vertreter: Klein, Thomas

(57) **Zusammenfassung**

Die Erfindung bezieht sich auf eine Gasfeder 1 mit einem einen ersten Druckrohrraum 7 und einen zweiten Druckrohrraum 8 aufweisenden und mit einem Druckfluid befüllten Druckrohr 3, mit einem den ersten Druckrohrraum 7 und den zweiten Druckrohrraum 8 verbindenden Strömungskanal 12 für das Druckfluid und mit einer Heizvorrichtung 14 zum Erwärmen des Druckfluids, wobei das Druckfluid auf ein relativ zu dem Druckrohr 3 bewegbares Betätigungsmittel 6 einwirkbar ist. Zur Verbesserung der Heizwirkung wird vorgeschlagen, daß die Heizvorrichtung 14 innerhalb des Strömungskanales 12 und/oder unmittelbar an den Strömungskanal 12 angrenzend angeordnet ist.

## Beschreibung

Die Erfindung bezieht sich auf eine Gasfeder mit einem einen ersten Druckrohrraum und einen zweiten Druckrohrraum aufweisenden und mit einem Druckfluid befüllten Druckrohr, mit einem den ersten Druckrohrraum und den zweiten Druckrohrraum verbindenden Strömungskanal für das Druckfluid und mit einer Heizvorrichtung zum Erwärmen des Druckfluids, wobei das Druckfluid auf ein relativ zu dem Druckrohr bewegbares Betätigungsmittel einwirkbar ist.

Eine solche Gasfeder ist für ein Kraftfahrzeug als Hubhilfe und zum Vorspannen einer Heckklappe oder eines Kofferraumdeckels bekannt. Diese Gasfeder besitzt einen metallischen, einseitig geschlossenen Zylinder, einen darin gelagerten Dämpfungskolben, eine mit dem Dämpfungskolben verbundene metallische Kolbenstange und eine am offenen Ende des Zylinders zwischen dem Zylinder und der Kolbenstange vorgesehene Dichtung. Allgemein ist die Ausschubkraft von Gasfedern temperaturabhängig, da sich der Druck eines geschlossenen Gasvolumens in Abhängigkeit von der Temperatur ändert. Aus diesem Grund ist in dem Zylinder vorgenannter Gasfeder, dem eingeschlossenen Gasvolumen unmittelbar zugeordnet, eine elektrische Heizung angeordnet, mit der es möglich sein soll, Dämpfungseigenschaften der Gasfeder zu erreichen, die weitgehend unabhängig von Schwankungen der Umgebungstemperatur sind.

Zur Verwendung als Bewegungshilfe für bewegliche Konstruktionsteile in wechselnden Umgebungstemperaturen ausgesetzten Konstruktionen ist eine weitere bekannte, ein Druckgasvolumen aufweisende Gasfeder mit einem elektrischen Beheizungsmittel vorgesehen. Zur Kompensation von Druckveränderungen des Druckgasvolumens als Folge von Veränderungen der Umgebungstemperatur der Gasfeder ist dieser das elektrische Beheizungsmittel in Wärmeaustauschverbindung mit dem Druckgasvolumen zugeordnet.

Bei den vorbeschriebenen Gasfedern wirkt die Heizung jeweils auf ein ruhendes Druckgasvolumen, wodurch sich eine inhomogene Wärmeverteilung in dem Druckgasvolumen und ein hoher Heizleistungsbedarf ergibt.

Darüber hinaus sind Federbeine bekannt, bei denen neben Gasfedern im wesentlichen von der Umgebungstemperatur unabhängige Federeigenschaften aufweisende Stahlfedern einen erheblichen Anteil an der Ausschubkraft übernehmen. Derartige Federbeine haben ein hohes Gewicht, sind vergleichsweise teuer und erzeugen zudem unerwünschte Störgeräusche.

Der vorliegenden Erfindung liegt ausgehend vom Stand der Technik die Aufgabe zugrunde, eine Gasfeder der eingangs genannten Art zu schaffen, die weitestgehend temperaturunabhängige Federeigenschaften bei geringer Heizleistung aufweist.

Diese Aufgabe wird erfindungsgemäß dadurch gelöst, daß bei einer Gasfeder der eingangs genannten Art die Heizvorrichtung innerhalb des Strömungskanales und/oder unmittelbar an den Strömungskanal angrenzend angeordnet ist.

Dadurch ergibt sich bei einer erfindungsgemäßen Gasfeder der besondere Vorteil, daß das Druckfluid, vorzugsweise ein Gas wie etwa komprimierter Stickstoff, während seines Strömens in unmittelbarem Kontakt mit der Heizvorrichtung steht. Die Heizvorrichtung befindet sich direkt in oder unmittelbar an einem Strömungsweg des Druckfluids. Gegenüber aus dem Stand der Technik bekannten Heizvorrichtungen, die ein ruhendes Gasvolumen erwärmen, erfolgt mit der Erfindung ein wesentlich verbesserter Wärmeübergang von der Heizvorrichtung auf das Druckfluid, so daß sowohl eine schnellere Erwärmung des Druckfluids als auch eine Verringerung der Heizleistung ermöglicht ist. Der Wirkungsgrad der Heizvorrichtung ist wesentlich erhöht. Durch ein Beheizen des Druckfluids beim Durchströmen des Strömungskanales, insbesondere bei niedrigen Umgebungstemperaturen, kann ein Druckabfall in der Gasfeder infolge einer Temperaturreduzierung kompensiert werden. Infolgedessen ist die erfindungsgemäße Gasfeder besonders geeignet zum Einsatz innerhalb eines breiten Temperaturbandes, beispielsweise in Kraftfahrzeugen. Bei der Heizvorrichtung handelt es sich vorzugsweise um eine elektrische Heizung, insbesondere eine elektrische Widerstandsheizung, die zum Beispiel über Kontaktbahnen an dem Druckrohr und Schleifkontakte elektrisch kontaktiert sein kann; von Vorteil ist eine Ausbildung der Heizvorrichtung als elektrisch beheizter Wärmetauscher. Von besonderem Vorteil bei der erfindungsgemäßen Gasfeder ist, daß die Heizvorrichtung grundsätzlich nur temporär betrieben werden muß, nämlich dann, wenn Druckfluid durch den Strömungskanal fließt und/oder gegebenenfalls nur dann, wenn die Umgebungstemperatur der Gasfeder einen, beispielsweise voreinstellbaren, Temperaturschwellwert unterschreitet. Ein dauerhaftes Heizen ist nicht erforderlich, ein gegebenenfalls gewünschtes Feststellen des Betätigungsmittels, das zum Beispiel eine mit einer Fahrzeugklappe verbindbare Kolbenstange zur unterstützenden Betätigung der Fahrzeugklappe aufweisen kann, kann beispielsweise mit Hilfe eines Rückschlagventiles in dem Strömungskanal erfolgen. Aufgrund der Zuordnung der Heizvorrichtung zum Strömungskanal und der vergleichsweise geringen erforderlichen Heizleistung kann die erfindungsgemäße Gasfeder vorteilhaft einen sehr kompakten Aufbau und ein geringes Gewicht aufweisen. Das Druckrohr ist vorzugsweise ein Zylinder.

Der Aufbau der Gasfeder wird vereinfacht und ein besonders guter Wärmeübergang auf das Druckfluid erreicht, wenn die Heizvorrichtung gemäß einer vorteilhaften Weiterbildung der Erfindung von dem Druckfluid um- und/oder durchströmbar an einem Auslaß des Strömungskanales oder an einem Einlaß des Strömungskanales angeordnet ist.

Vorteilhaft insbesondere für eine hohe Betriebssicherheit und Dauerhaltbarkeit der Gasfeder ist es, wenn gemäß einer anderen Weiterbildung der Erfindung das Betätigungsmittel einen den ersten Druckrohrraum von dem zweiten Druckrohrraum trennenden und von dem Druckfluid durch den Strömungskanal überströmbaren Kolben aufweist.

Dabei ist es von besonderem Vorteil für einen kompakten und betriebssicheren Aufbau der Gasfeder, wenn gemäß einer Weiterbildung der Erfindung der Kolben den Strömungskanal aufweist. Beispielsweise kann der Strömungskanal als axiale Randnut des Kolbens ausgebildet sein oder den Kolben axial in Form einer Röhre durchgreifen. Beim Durchströmen des Kolbens erfolgt eine Erwärmung des Druckfluids, wodurch ein Druckabfall in der Gasfeder infolge einer Temperaturreduzierung ausgeglichen werden kann.

Gemäß einer anderen vorteilhaften Weiterbildung der Erfindung sind der Kolben und die Heizvorrichtung ein einziges Bauelement bildend miteinander verbunden. Die Heizvorrichtung kann beispielsweise in einfacher Weise auf der Kolbenoberfläche am Ausgang des Strömungskanales angeordnet und von dem Druckfluid durchströmbar sein.

Der Aufbau und die Herstellung der Gasfeder können weiter vereinfacht werden, wenn gemäß einer anderen vorteilhaften Weiterbildung der Erfindung der Kolben einen radial zwischen dem Kolben und einer Innenwandung des Druckrohres angeordneten Kolbenring aufweist und wenn eine dem Kolbenring zugewandte Außenseite des Kolbens und eine dem Kolben zugewandte Innenseite des Kolbenringes zumindest einen Abschnitt des Strömungskanales bilden.

Gemäß einer vorteilhaften Weiterbildung der Erfindung ist die Heizvorrichtung in dem Kolbenring angeordnet, so daß eine weitere Erhöhung der Bauteilintegration der Gasfeder erreicht werden kann.

Besonders vorteilhaft ist es, wenn gemäß einer anderen Weiterbildung der Erfindung der Kolbenring gegenüber dem Kolben axial verschiebbar ist. Auf diese Weise kann der Kolbenring gleichzeitig ein einen Rückfluß von Druckfluid durch den Strömungskanal verhinderndes Rückschlagventil sein, wenn der Kolbenring in einer axial verschobenen Stellung den Strömungskanal absperrt.

Eine definierte Ventilfunktion mit exakter Schließstellung bei hoher Dauerhaltbarkeit und Betriebssicherheit läßt sich vorteilhaft erreichen, wenn der Kolben zur Begrenzung der axialen Verschiebbarkeit des Kolbenringes einen ersten Axialanschlag und einen von dem ersten Axialanschlag axial beabstandeten zweiten Axialanschlag aufweist und der Kolbenring zwischen den beiden Axialanschlägen angeordnet ist.

Einen besonders einfachen konstruktiven Aufbau erhält die Gasfeder vorteilhaft, wenn gemäß einer anderen Weiterbildung der Erfindung zumindest ein Teil der Heizvorrichtung eine Wandung des Strömungskanales bildet. Dabei steht das durch den Strömungskanal hindurchfließende Druckfluid in unmittelbarem Kontakt mit der Heizvorrichtung.

Gemäß einer anderen vorteilhaften Weiterbildung der Erfindung weist der Kolben zwei axial voneinander beabstandete Kolbenringe auf, und zwischen den beiden Kolbenringen ist die Heizvorrichtung von dem Druckfluid um- und/oder durchströmbar in dem Strömungskanal angeordnet. Unter anderem eine solche Ausführungsform ermöglicht eine dynamische Endlagendämpfung des Kolbens.

In sehr einfacher Weise läßt sich eine Rückbewegung des Betätigungsmittels verwirklichen, wenn gemäß einer anderen vorteilhaften Weiterbildung der Erfindung ein zweiter den ersten Druckrohrraum und den zweiten Druckrohrraum verbindender Strömungskanal vorgesehen ist und die beiden Strömungskanäle gegenläufig von dem Druckfluid durchströmbar sind.

Dabei kann insbesondere eine hohe Betriebssicherheit der Gasfeder erreicht werden, wenn gemäß einer vorteilhaften Weiterbildung der Erfindung die Strömungskanäle jeweils ein Rückschlagventil aufweisen und die Rückschlagventile gegenläufig angeordnet sind.

Von besonderem Vorteil ist es, wenn gemäß einer Weiterbildung der Erfindung das Rückschlagventil des zweiten Strömungskanales ein Rückschlagventil mit temperaturabhängiger Schließkraft ist. Ein solches temperaturgesteuertes Rückschlagventil, das zum Beispiel eine Bimetallfeder aufweisen kann, kann zuverlässig sicherstellen, daß der ein Rückfließen des Druckfluids ermöglichende, zweite Strömungskanal bei niedrigen Temperaturen geschlossen ist. Soll das Betätigungsmittel, insbesondere ein Kolben mit einer Kolbenstange, in das Druckrohr eingeschoben werden, so bietet das temperaturgesteuerte Ventil einen bestimmten Öffnungsdruck, der bei vergleichsweise niedrigen Temperaturen höher ist als bei vergleichsweise hohen Temperaturen. Damit bleibt die Gasfeder auch bei niedrigen Temperaturen sicher ausgeschoben. Ein weiterer Vorteil des temperaturgesteuerten Ventiles besteht darin, daß ein Erwärmen des Druckfluids und somit ein Betrieb der Heizvorrichtung lediglich bei einem Ausschieben des Betätigungsmittels, insbesondere einer Kolbenstange, erforderlich ist; in ausgefahrener Stellung des Betätigungsmittels wird das mit der Gasfeder zu betätigende Element, beispielsweise eine Kraftfahrzeugklappe, durch den Öffnungsdruck gehalten.

Gemäß einer anderen vorteilhaften Weiterbildung der Erfindung weist die Innenwandung des Druckrohres in einem mittleren Abschnitt des maximalen Weges des Betätigungsmittels eine von dem Druckfluid zur Überbrückung des Betätigungsmittels durchströmbare Nut auf. Diese als Überströmleitung dienende Nut ermöglicht eine schnellere Bewegung des Betätigungsmittels in seinem mittleren Wegbereich, wohingegen vor Erreichen der Endstellungen des Betätigungsmittels aufgrund erhöhter Gegenkräfte eine Verlangsamung der Bewegung des Betätigungsmittels eintritt. Die Nut erstreckt sich somit im Falle eines Zylinders mit einem eine Kolbenstange aufweisenden Kolben über eine bestimmte, mittlere Strecke des Hubes des Kolbens, nicht aber in die Endbereiche des Hubes.

Ausführungsbeispiele der Erfindung sind in der Zeichnung schematisiert dargestellt und werden im folgenden näher erläutert. Es zeigen
- Figur 1:: eine Gasfeder in einem Längsschnitt,
- Figur 2:: einen Ausschnitt eines Druckrohres einer anderen Gasfeder mit einer Heizvorrichtung,
- Figur 3:: einen Ausschnitt eines Druckrohres einer dritten Gasfeder mit einer Heizvorrichtung und
- Figur 4:: einen Ausschnitt eines Druckrohres einer vierten Gasfeder mit einer Heizvorrichtung.

Sich jeweils entsprechende Elemente sind in allen Figuren mit gleichen Bezugszeichen versehen.

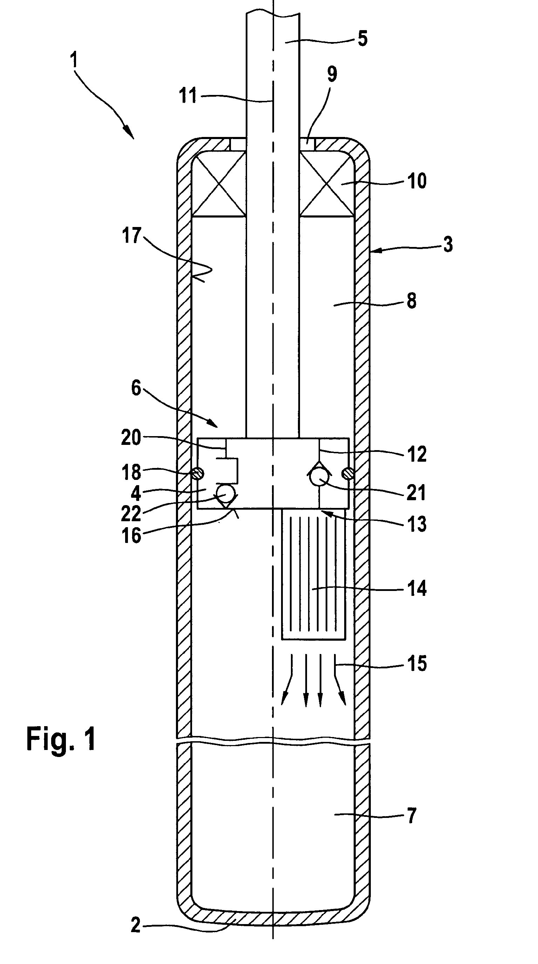

Figur 1 zeigt in einem Längsschnitt eine Gasfeder 1 mit einem einseitig geschlossenen, einen Boden 2 aufweisenden Druckrohr 3. Das Druckrohr 3 ist mit einem Gas als Druckfluid befüllt. Ein Kolben 4 mit einer einseitigen Kolbenstange 5 ist als bewegbares, nämlich in Richtung einer Mittelachse 11 des Druckrohres 3 gegenüber dem Druckrohr 3 verschiebbares, Betätigungsmittel 6 für eine hier nicht dargestellte, mit der Kolbenstange 5 in einer Wirkverbindung stehende Klappe eines Kraftfahrzeuges in dem Druckrohr 3 geführt. An einer dem Boden 2 gegenüberliegenden Seite des Druckrohres 3 weist das Druckrohr 3 eine Öffnung 9 auf, durch die die Kolbenstange 5 aus dem Druckrohr 3 heraustritt. Eine Dichtung 10 dient einer Abdichtung der Öffnung 9 gegenüber der Kolbenstange 5.

Das Druckrohr 3 weist einen ersten Druckrohrraum 7 und einen zweiten Druckrohrraum 8 auf, welche Druckrohrräume 7, 8 mittels des Kolbens 4 voneinander getrennt sind. Ein in dem Kolben 4 angeordneter Strömungskanal 12 verbindet die beiden Druckrohrräume 7, 8. Direkt an einem Auslaß 13 des Strömungskanales 12 in den ersten Druckrohrraum 7 und somit unmittelbar an den Strömungskanal 12 angrenzend ist eine von dem Druckfluid durchströmbare Heizvorrichtung 14 zum Erwärmen des Druckfluids angeordnet. Das die Heizvorrichtung 14 bei einem Überströmen von dem zweiten Druckrohrraum 8 in den ersten Druckrohrraum 7 durchströmende Druckfluid ist durch Pfeile 15 symbolisiert.
Kolben 4 und Heizvorrichtung 14 sind ein einziges Bauelement bildend miteinander verbunden, wobei die Heizvorrichtung 14 auf einer dem ersten Druckrohrraum 7 zugewandten Kolbenfläche 16 des Kolbens 4 angeordnet ist. Gegenüber einer Innenwandung 17 des Druckrohres 3 ist der Kolben 4 mittels eines auf den Umfang des Kolbens 4 aufgesetzten Kolbenringes 18 abgedichtet. In einem mittleren Abschnitt des maximalen Weges des Kolbens 4 des Betätigungsmittels 6 weist die Innenwandung 17 des Druckrohres 3 eine von dem Druckfluid zur Überbrückung des Kolbens 4 durchströmbare Nut 19 auf, die eine Endlagendämpfung des Betätigungsmittels 6 bewirkt.

In dem Kolben 4 ist ein zweiter den ersten Druckrohrraum 7 und den zweiten Druckrohrraum 8 verbindender Strömungskanal 20 angeordnet. Die beiden Strömungskanäle 12, 20 sind gegenläufig von dem Druckfluid durchströmbar, und zwar kann der erste Strömungskanal 12 von dem zweiten Druckrohrraum 8 zum ersten Druckrohrraum 7 hin durchströmt werden und der zweite Strömungskanal 20 von dem ersten Druckrohrraum 7 zum zweiten Druckrohrraum 8 hin. Dieses wird durch Rückschlagventile 21, 22 bewirkt, die gegenläufig angeordnet sind und von denen sich jeweils eines in einem der Strömungskanäle 12, 20 befindet. Dabei ist das Rückschlagventil 22 des zweiten Strömungskanales 20 ein Rückschlagventil mit temperaturabhängiger Schließkraft; bei niedrigen Temperaturen ist die Schließkraft dieses Rückschlagventiles 22 höher als bei hohen Temperaturen. Dadurch wird ein Zurückfahren des Kolbens 4 bei sich reduzierendem Druck verhindert.

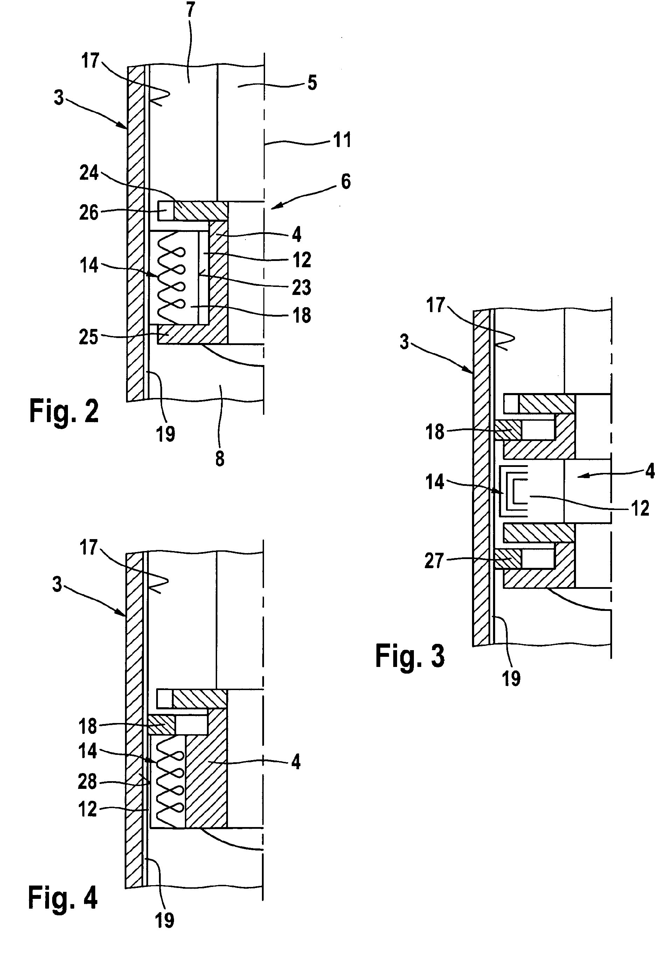

Einen Ausschnitt eines Druckrohres 3 einer anderen, hier nicht weiter dargestellten, mit einem Druckfluid befüllten Gasfeder zeigt Figur 2. Auch hier ist - entsprechend dem Ausführungsbeispiel nach Figur 1 - ein Betätigungsmittel 6 mit einer Kolbenstange 5 und einem einen ersten Druckrohrraum 7 von einem zweiten Druckrohrraum 8 trennenden Kolben 4 vorgesehen. Mittels eines radial zwischen dem Kolben 4 und einer Innenwandung 17 des Druckrohres 3 angeordneten Kolbenringes 18 ist der Kolben 4 gegenüber der Innenwandung 17 des Druckrohres 3 abgedichtet. Eine Nut 19 der Innenwandung 17 des Druckrohres 3 dient als Überströmleitung zur Überbrückung des Kolbens 4, und zwar für eine Endlagendämpfung des Kolbens 4.

Eine dem Kolbenring 18 zugewandte Außenseite des Kolbens 4 und eine dem Kolben 4 zugewandte Innenseite des Kolbenringes 18 bilden einen Abschnitt eines den ersten Druckrohrraum 7 und den zweiten Druckrohrraum 8 verbindenden Strömungskanales 12. In seinen den Druckrohrräumen 7, 8 zugewandten Endbereichen setzt sich der Strömungskanal 12 jeweils labyrinthartig zwischen Kolbenring 18 und Kolben 4 sowie letztlich zwischen Kolben 4 und Innenwandung 17 des Druckrohres 3 fort.

In dem Kolbenring 18 und in diesen integriert ist eine Heizvorrichtung 14 zum Erwärmen des den Strömungskanal 12 durchströmenden Druckfluids angeordnet. Die Heizvorrichtung 14 ist unmittelbar an den Strömungskanal 12 angrenzend, eine Wandung 23 des Strömungskanales 12 bildend in dem Kolbenring 4 angeordnet.

Der Kolbenring 18 ist gegenüber dem Kolben 4 axial, das heißt in Richtung einer Mittelachse 11 des Druckrohres 3, verschiebbar, wobei der Kolben 4 zur Begrenzung der axialen Verschiebbarkeit des Kolbenringes 18 einen ersten Axialanschlag 24 und einen von dem ersten Axialanschlag 24 axial beabstandeten zweiten Axialanschlag 25 aufweist. Der Kolbenring 18 dient so gleichzeitig als Rückschlagventil zum Verschließen des Strömungskanales 12. In der hier gezeigten Stellung, in der der Kolbenring 18 an dem zweiten, dem zweiten Druckrohrraum 8 zugewandten Axialanschlag 25 anliegt, ist der Strömungskanal 12 verschlossen; Druckfluid kann nicht aus dem ersten Druckrohrraum 7 in den zweiten Druckrohrraum 8 zurückfließen. Hingegen ist ein Überfließen von Druckfluid von dem zweiten Druckrohrraum 8 zu dem ersten Druckrohrraum 7 ermöglicht: Das Druckfluid verschiebt in diesem Fall den Kolbenring 28 gegen den ersten Axialanschlag 24, welcher einen Durchlaß 26 aufweist, durch den das Druckfluid hindurchströmen kann.

Eine ähnliche Ausführung einer mit einem Druckfluid befüllten Gasfeder mit einem Druckrohr 3 zeigt Figur 3 in einem Ausschnitt. Jedoch weist hier ein Kolben 4 zwei axial voneinander beabstandete Kolbenringe 18, 27 auf, und zwischen diesen beiden Kolbenringen 18, 27 ist eine Heizvorrichtung 14 von einem Druckfluid durchströmbar in einem Strömungskanal 12 angeordnet. Eine Nut 19 in der Innenwandung 17 des Druckrohres 3 ist für eine Endlagendämpfung des Kolbens 4 vorgesehen.

Eine weitere Ausführungsform einer mit einem Druckfluid befüllten Gasfeder mit einem Druckrohr 3 zeigt in einem Ausschnitt Figur 4. Hier ist ein Kolben 4 vorgesehen, der mit einer Innenwandung 17 des Druckrohres 3 einen Strömungskanal 12 bildet. Eine Heizvorrichtung 14 zum Erwärmen von durch den Strömungskanal 12 fließendem Druckfluid ist in dem Kolben 4 und in diesen integriert angeordnet. Die Heizvorrichtung 14 bildet eine Wandung 28 des Strömungskanales 12, und ein Kolbenring 18 dient als Rückschlagventil in dem Strömungskanal 12. Auch bei diesem Ausführungsbeispiel ist eine Nut 19 in der Innenwandung 17 des Druckrohres 3 für eine Endlagendämpfung des Kolbens 4 vorgesehen.

### Bezugszeichenliste

- 1: Gasfeder
- 2: Boden
- 3: Druckrohr
- 4: Kolben
- 5: Kolbenstange
- 6: Betätigungsmittel
- 7: Druckrohrraum
- 8: Druckrohrraum
- 9: Öffnung
- 10: Dichtung
- 11: Mittelachse
- 12: Strömungskanal
- 13: Auslaß
- 14: Heizvorrichtung
- 15: Pfeil
- 16: Kolbenfläche
- 17: Innenwandung
- 18: Kolbenring
- 19: Nut
- 20: Strömungskanal
- 21: Rückschlagventil
- 22: Rückschlagventil
- 23: Wandung
- 24: Axialanschlag
- 25: Axialanschlag
- 26: Durchlaß
- 27: Kolbenring
- 28: Wandung

## Patentansprüche

1. Gasfeder mit einem einen ersten Druckrohrraum und einen zweiten Druckrohrraum aufweisenden und mit einem Druckfluid befüllten Druckrohr, mit einem den ersten Druckrohrraum und den zweiten Druckrohrraum verbindenden Strömungskanal für das Druckfluid und mit einer Heizvorrichtung zum Erwärmen des Druckfluids, wobei das Druckfluid auf ein relativ zu dem Druckrohr bewegbares Betätigungsmittel einwirkbar ist, **dadurch gekennzeichnet , daß** die Heizvorrichtung (14) innerhalb des Strömungskanales (12) und/oder unmittelbar an den Strömungskanal (12) angrenzend angeordnet ist.

2. Gasfeder nach Anspruch 1, **dadurch gekennzeichnet, daß** die Heizvorrichtung (14) von dem Druckfluid um- und/oder durchströmbar an einem Auslaß (13) des Strömungskanales (12) oder an einem Einlaß des Strömungskanales (12) angeordnet ist.

3. Gasfeder nach einem der Ansprüche 1 und 2, **dadurch gekennzeichnet , daß** das Betätigungsmittel (6) einen den ersten Druckrohrraum (7) von dem zweiten Druckrohrraum (8) trennenden und von dem Druckfluid durch den Strömungskanal (12) überströmbaren Kolben (4) aufweist.

4. Gasfeder nach Anspruch 3, **dadurch gekennzeichnet , daß** der Kolben (4) den Strömungskanal (12) aufweist.

5. Gasfeder nach einem der Ansprüche 3 und 4, **dadurch gekennzeichnet , daß** der Kolben (4) und die Heizvorrichtung (14) ein einziges Bauelement bildend miteinander verbunden sind.

6. Gasfeder nach einem der Ansprüche 3 bis 5, **dadurch gekennzeichnet, daß** der Kolben (4) einen radial zwischen dem Kolben (4) und einer Innenwandung (17) des Druckrohres (3) angeordneten Kolbenring (18) aufweist und daß eine dem Kolbenring (18) zugewandte Außenseite des Kolbens (4) und eine dem Kolben (4) zugewandte Innenseite des Kolbenringes (18) zumindest einen Abschnitt des Strömungskanales (12) bilden.

7. Gasfeder nach Anspruch 6, **dadurch gekennzeichnet, daß** die Heizvorrichtung (14) in dem Kolbenring (18) angeordnet ist.

8. Gasfeder nach einem der Ansprüche 6 und 7, **dadurch gekennzeichnet , daß** der Kolbenring (18) gegenüber dem Kolben (4) axial verschiebbar ist.

9. Gasfeder nach Anspruch 8, **dadurch gekennzeichnet , daß** der Kolben (4) zur Begrenzung der axialen Verschiebbarkeit des Kolbenringes (18) einen ersten Axialanschlag (24) und einen von dem ersten Axialanschlag (24) axial beabstandeten zweiten Axialanschlag (25) aufweist und daß der Kolbenring (18) zwischen den beiden Axialanschlägen (24, 25) angeordnet ist.

10. Gasfeder nach einem der vorhergehenden Ansprüche, **dadurch gekennzeichnet , daß** zumindest ein Teil der Heizvorrichtung (14) eine Wandung (23; 28) des Strömungskanales (12) bildet.

11. Gasfeder nach einem der Ansprüche 6 bis 10, **dadurch gekennzeichnet , daß** der Kolben (4) zwei axial voneinander beabstandete Kolbenringe (18, 27) aufweist und daß zwischen den beiden Kolbenringen (18, 27) die Heizvorrichtung (14) von dem Druckfluid um- und/oder durchströmbar in dem Strömungskanal (12) angeordnet ist.

12. Gasfeder nach einem der vorhergehenden Ansprüche, **dadurch gekennzeichnet , daß** ein zweiter den ersten Druckrohrraum (7) und den zweiten Druckrohrraum (8) verbindender Strömungskanal (20) vorgesehen ist und daß die beiden Strömungskanäle (12, 20) gegenläufig von dem Druckfluid durchströmbar sind.

13. Gasfeder nach Anspruch 12, **dadurch gekennzeichnet, daß** die Strömungskanäle (12, 20) jeweils ein Rückschlagventil (21, 22) aufweisen und daß die Rückschlagventile (21, 22) gegenläufig angeordnet sind.

14. Gasfeder nach Anspruch 13, **dadurch gekennzeichnet, daß** das Rückschlagventil (22) des zweiten Strömungskanales (20) ein Rückschlagventil (22) mit temperaturabhängiger Schließkraft ist.

15. Gasfeder nach einem der vorhergehenden Ansprüche, **dadurch gekennzeichnet, daß** die Innenwandung (17) des Druckrohres (3) in einem mittleren Abschnitt des maximalen Weges des Betätigungsmittels (6) eine von dem Druckfluid zur Überbrückung des Betätigungsmittels (6) durchströmbare Nut (19) aufweist.

## Geänderte Patentansprüche

### Geänderte Patentansprüche gemäss Regel 86(2) EPÜ.

**1.** Gasfeder mit einem einen ersten Druckrohrraum und einen zweiten Druckrohrraum aufweisenden und mit einem Druckfluid befüllten Druckrohr, mit einem den ersten Druckrohrraum und den zweiten Druckrohrraum verbindenden Strömungskanal für das Druckfluid und mit einer Heizvorrichtung zum Erwärmen des Druckfluids, wobei das Druckfluid auf ein relativ zu dem Druckrohr bewegbares Betätigungsmittel einwirkbar ist, **dadurch gekennzeichnet, daß** die Heizvorrichtung (14) innerhalb des Strömungskanales (12) und/oder unmittelbar an den Strömungskanal (12) angrenzend angeordnet und das Druckfluid beim Durchströmen des Strömungskanals (12) beheizbar ist.
